Europäisches Patentamt

European Patent Office

Office européen des brevets

(19)

(11) **EP 1 050 056 B1**

(12) **FASCICULE DE BREVET EUROPEEN**

(45) Date de publication et mention
de la délivrance du brevet:
**20.11.2002 Bulletin 2002/47**

(21) Numéro de dépôt: **99900523.4**

(22) Date de dépôt: **12.01.1999**

(51) Int Cl.[7]: **H01F 41/14**, G11B 11/10,
H01P 11/00

(86) Numéro de dépôt international:
**PCT/FR99/00043**

(87) Numéro de publication internationale:
**WO 99/035657 (15.07.1999 Gazette 1999/28)**

(54) **PROCEDE DE GRAVURE MAGNETIQUE, POUR NOTAMMENT L'ENREGISTREMENT
MAGNETIQUE OU MAGNETO-OPTIQUE**

VERFAHREN ZUR MAGNETISCHEN GRAVUR FÜR MAGNETISCHE ODER
MAGNETO-OPTISCHE AUFZEICHNUNG

MAGNETIC ENGRAVING METHOD, IN PARTICULAR FOR MAGNETIC OR MAGNETO-OPTICAL
RECORDING

(84) Etats contractants désignés:
**AT BE CH CY DE DK ES FI FR GB GR IE IT LI LU
MC NL PT SE**

(30) Priorité: **12.01.1998 FR 9800199**

(43) Date de publication de la demande:
**08.11.2000 Bulletin 2000/45**

(73) Titulaire: **CENTRE NATIONAL DE
LA RECHERCHE SCIENTIFIQUE (CNRS)
75794 Paris Cedex 16 (FR)**

(72) Inventeurs:
• **CHAPPERT, Claude
F-92380 Garches (FR)**
• **BERNAS, Harry
F-75014 Paris (FR)**
• **FERRE, Jacques
F-91370 Verrières-le-Buisson (FR)**

(74) Mandataire: **Schrimpf, Robert et al
Cabinet Regimbeau
20, rue de Chazelles
75847 Paris cedex 17 (FR)**

(56) Documents cités:
• PATENT ABSTRACTS OF JAPAN vol. 014, no.
078 (P-1006), 14 février 1990 & JP 01 292699 A
(HITACHI LTD), 24 novembre 1989

• XIAO J Q ET AL: "EFFECTS OF AR-ION
IMPLANTATION AND ANNEALING ON
STRUCTURAL AND MAGNETIC PROPERTIES
OF CO/PD MULTILAYERS" JOURNAL OF
APPLIED PHYSICS, vol. 76, no. 10, PART 02, 15
novembre 1994, pages 6081-6083, XP000508709
• AMARAL L ET AL: "VERY THIN FE/NI
MODULATION MULTILAYER FILMS UNDER ION
BOMBARDMENT" JOURNAL OF APPLIED
PHYSICS, vol. 81, no. 8, PART 02B, 15 avril 1997,
pages 4773-4775, XP000701105
• GLADYSZEWSKI G ET AL: "MODIFICATION OF
STRUCTURE, ELECTRIC AND MAGNETIC
PROPERTIES OF EPITAXIALLY GROWN
AG(001)/FE(001) SUPERLATTICES" JOURNAL
OF MAGNETISM AND MAGNETIC MATERIALS,
vol. 156, no. 1/03, 1 avril 1996, page 381/382
XP000589438
• CHOE G ET AL: "EFFECT OF ION BEAM MIXING
ON MICROSTRUCTURE AND MAGNETIC
PROPERTIESOF GD-CO MULTILAYER FILMS"
JOURNAL OF APPLIED PHYSICS, vol. 79, no. 8,
PART 02B, 15 avril 1996, pages 6306-6308,
XP000695063
• SCHELP L F ET AL: "STRUCTURAL AND
MAGNETIC BEHAVIOR OF AR+-IMPLANTED
CO/PD MULTILAYERS: INTERFACIAL MIXING"
JOURNAL OF APPLIED PHYSICS, vol. 75, no. 10,
PART 01, 15 mai 1994, pages 5262-5266,
XP000444334

**Description**

La présente invention est relative à un procédé de gravure magnétique.

Plus particulièrement, l'invention trouve avantageusement application pour l'enregistrement magnétique ultra-haute densité (élaboration de matériaux magnétiques discrets, circuits de mémoires magnétiques, circuits logiques à commande magnétique, ...), l'enregistrement optique de type à mémoire morte (CDROM, DVDROM,...), et la réalisation de circuits optiques à commande magnétique (réseaux diffractants, matériaux à gap photonique, ...) utilisant une variation contrôlée de la composante d'indice optique liée au magnétisme.

ETAT DE LA TECHNIQUE

L'extraordinaire développement des technologies et services multimédias lors de ces dernières années a entraîné une course à l'augmentation de la densité d'enregistrement. Dans le domaine des disques réinscriptibles, bien que les technologies optiques (changement de phase) se développent rapidement, les techniques magnétiques gardent la première place, et tout particulièrement le "disque dur", pour sa vitesse de transfert élevée. Toutefois, les techniques magnétiques devraient être limitées à des densités de stockage de 100 bits/cm$^2$.

Un des facteurs limitatifs sera notamment le passage à l'enregistrement de contact, pour des distances entre la tête de lecture et le support d'enregistrement inférieures à 10 nm : on parle d'évolution vers des technologies d'enregistrement type "microscopie à effet tunnel" («STM like storage» selon la terminologie anglosaxonne), ou en "champ proche".

Plusieurs sauts technologiques ont été proposés dans cette direction durant les dernières années, par exemple le CD-ROM en champ proche, ou l'enregistrement magnéto-optique en champ proche. On pourra à cet égard avantageusement se référer aux différentes publications suivantes :

Y. Martin, S. Rishton, H.K. Wickramasinghe, Appl. Phys. Lett. 71, 1 (1997).
Y.Betzig, J.K. Trautman, T.D. Harris, J.S. Weiner, R. L. Kostelak , Science **251**, 1468 (1991).
B.D. Terris, H.J. Mamin, D. Rugar, W.R. Studenmund, G.S. Kino, Appl. Phys. Lett. **65**, 388 (1994).
E. Betzig et al., Appl. Phys. Lett. **61**, 142 (1992).
M. Myamoto, J. Ushiyama, S. Hosaka, R. Imura, J. Magn. Soc. Jpn. **19-S1**, 141 (1994).
T.J. Silva, S.Schultz, D.Weller, Appl. Phys. Lett. **65**, 658 (1994).
M.W.J. Prinz, R.H.M. Groeneveld, D.L. Abraham, H. van Kempen, H.W. van Kesteren, Applied. Phys. Lett. **66**, 1141 (1995).

On pourra également se reporter à la publication :

B.D. Terris H.J. Mamin, D. Rugar, Appl. Phys. Lett. 68, 141 (1996) dans laquelle est annoncée la commercialisation prochaine par la société 3M d'un "disque dur" à lecture magnéto-optique utilisant une lentille à immersion solide (SIL).

Toutefois, la limitation principale des techniques magnétiques devrait être la "limite paramagnétique", c'est-à-dire la taille en dessous de laquelle les bits s'effaceront d'eux même par effet thermique.

Dans la technologie du disque dur actuelle, le support d'enregistrement est un matériau particulaire (grains magnétiques dans une matrice non magnétique, ou encore des grains magnétiques séparés par des joints de grains non magnétiques (ME tape)). Or, la minimisation du bruit impose d'augmenter le nombre de particules magnétiques vues par la tête de lecture, tandis que ces particules doivent être le plus possible découplées magnétiquement. La taille des particules est donc très inférieure à la taille de bit. En extrapolant les données actuelles, les particules deviendront paramagnétiques en dessous de 8nm, ce qui limite la densité d'enregistrement autour de 100 bits/$\mu$m$^2$.

Dans l'enregistrement magnéto-optique, les matériaux utilisés à l'heure actuelle sont des alliages amorphes du type terre rare/métal de transition, qui pourraient être remplacés par des alliages ou multicouches Co/Pt avec l'avènement du laser bleu. Des bits de taille 60nm ont pu effectivement être écrits par effet thermo-magnétique dans des multicouches Co/Pt continues, mais il est probable que des problèmes de bruit dus au support d'enregistrement (stabilité du domaine, rugosité de sa paroi) interviendront, à des tailles de bits très supérieures à 60 nm.

Pour repousser cette limite, il a été proposé récemment de remplacer les matériaux support d'enregistrement actuels par des matériaux discrets, où les limites de bits magnétiques seraient définies géométriquement par des méthodes lithographiques :

soit dépôt sur surface gravée,
S. Gadetsky, J.K. Erwin, M. Mansuripur, J. Appl. Phys **79**, 5687 (1996).
soit croissance de particules magnétiques isolées de taille et position définies par lithographie,
S.Y. Chou, M.S. Wei, P.R. Krauss, P. Fischer, J. Appl. Phys. **76**, 6673 (1994).

Cette dernière technique permettrait de n'avoir qu'une seule particule magnétique par bit.

En parallèle, des techniques de pressage à partir d'une matrice définie par lithographie électronique ont été mises au point,
S.Y. Chou, P.R. Krauss, P.J. Renstrom, Science **272**, 85 (1996),

Y. Xia, X.M. Zhao, G.M. Whitesides, Microelecton. Eng. **32**, 255 (1996),

qui, de même que la lithographie par rayons X ou interférentielle, pourraient dans un avenir proche permettre la production en masse de supports gravés, avec des motifs de taille très inférieure au micron, sur des surfaces de quelques cm$^2$ probablement suffisantes pour les disques du futur.

Toutefois, dans l'état actuel des publications, ces différentes techniques présentent plusieurs inconvénients :

1. Quelle que soit la technique retenue, l'enregistrement en mode contact demandera un matériau de rugosité de surface faible et contrôlée : les matériaux gravés proposés jusqu'ici demanderont donc une étape finale de planarisation, probablement délicate.

2. Dans le cas de l'enregistrement magnéto-optique en champ proche, des variations d'indice optique (de réflectivité) brutales du matériau gravé donneront des effets de diffraction, qui peuvent se traduire par des variations de polarisation beaucoup plus fortes que celles induites par les domaines magnétiques, source de bruit inacceptable.

3. Un dernier problème aux très fortes densités sur ces matériaux gravés concerne le suivi de piste, et il faudra probablement mettre au point une "piste" spécialisée à cet effet, mais sans dégrader les points évoqués ci-dessus.

PRESENTATION DE L'INVENTION

L'invention propose quant à elle un procédé d'inscription sur un matériau selon lequel on irradie ledit matériau au moyen d'un faisceau d'ions légers, tels que des ions He+, d'une énergie de l'ordre de ou inférieure à la centaine de keV, caractérisé en ce que ce matériau est un matériau en couches minces enterrées déposées sur un substrat, en ce qu'on irradie une ou plusieurs zones de tailles de l'ordre du micromètre ou inférieure, la dose d'irradiation étant contrôlée pour être de quelques $10^{16}$ ions/cm$^2$ ou inférieure, l'irradiation modifiant la composition de plans atomiques dans le matériau à une interface entre deux couches de celui-ci. On modifie ainsi les propriétés magnétiques dudit matériau, telles que notamment sa coercivité, son anisotropie magnétique ou sa température de Curie.

Un tel procédé permet de résoudre les problèmes précités. Notamment :

1. La rugosité du film d'origine est inchangée par irradiation, et peut donc être ajustée de manière indépendante. En particulier, on peut envisager de reprendre un dépôt après irradiation (pour la réalisation de dispositifs) dans des conditions de croissance excellentes (% à une surface gravée).

2. Les variations d'indice optique restent faibles pour des changements considérables des propriétés magnétiques, et par ailleurs peuvent être contrôlées, dans une certaine gamme, quasi indépendamment des variations magnétiques obtenues, par la structure du substrat ou l'énergie des ions.

3. L'effet de l'irradiation est cumulatif : on peut procéder à l'irradiation en plusieurs fois, et obtenir le même résultat qu'en une seule fois avec la dose cumulée. Cet aspect peut être utile lorsqu'on veut irradier plusieurs zones de l'échantillon avec des valeurs différentes, ou à des étapes différentes de la fabrication d'un dispositif.

4. On peut facilement contrôler l'effet de l'irradiation en temps réel, en mesurant l'évolution des propriétés (magnétiques par exemple) sur une zone test.

5. La technique est facile à mettre en oeuvre pour la fabrication de masse de supports d'enregistrement et ce d'une façon économique puisque les outils qu'elle nécessite d'utiliser sont soit déjà utilisés en micro-électronique (irradiation), soit en cours de développement (lithographie par pressage pour des grandes surfaces et des tailles nanométriques par exemple).

Avantageusement, l'irradiation est faite au moyen d'un faisceau d'ions.

D'autres moyens techniques de dépôt d'énergie seraient envisageables.

L'irradiation peut se faire à travers un masque de résine ou à l'aide d'un faisceau d'ions focalisé.

Le procédé de gravure précité est avantageusement utilisé pour l'enregistrement magnétique ou magnéto-optique ultra-haute densité d'informations binaires, et notamment pour l'élaboration de matériaux magnétiques discrets, de circuits de mémoires magnétiques, ou de circuits logiques à commande magnétique.

En particulier, le procédé précité présente l'avantage de permettre d'écrire des domaines magnétiques de taille très inférieure à 100 nm, de position et géométrie parfaitement définies et donc de maximiser le rapport signal sur bruit et d'optimiser les problèmes de suivi de piste, tout en conservant une rugosité de surface parfaitement contrôlée.

Egalement, le procédé proposé par l'invention est avantageusement utilisé pour réaliser un enregistrement optique de type à mémoire morte (CDROM, DVDROM,...)

On sait en effet que les techniques d'enregistrement optique en champ proche devront probablement utiliser des matériaux d'inscription lisses, avec une tête de lecture volant à quelques nm au-dessus dudit matériau (30 nm pour un disque dur actuellement). Or les techniques actuelles d'enregistrement optique de type à mémoire morte, ne sont pas satisfaisantes : les méthodes de pressage à partir de matrices peuvent donner des tailles inférieures à 100 nm, mais le support d'enregistrement qui est obtenu est rugueux ; les méthodes d'écriture par faisceau laser focalisé (ablation, changement de phase) ne permettent pas quant à elles de travailler avec des tailles de bit de l'ordre de ou inférieures à 100 nm.

D'autres applications que l'enregistrement d'informations binaires sont envisageables. Notamment, le procédé de gravure magnétique proposé par l'invention est avantageusement utilisé pour la réalisation de circuits optiques à commande magnétique (réseaux diffractants, matériaux à gap photonique, ...) utilisant une variation contrôlée de la composante d'indice optique liée au magnétisme, pour la réalisation de capteurs (têtes de lecture de disque dur,...), ou de circuits mémoire magnétiques (mémoire à effet Hall extraordinaire, mémoire magnétorésistive, mémoire à effet tunnel dépendant du spin).

En particulier, on sait que l'émergence des matériaux à gap photonique ouvre la voie à la réalisation de dispositifs optiques et qu'un des aspects à résoudre sera celui de la commande du dispositif. Le procédé proposé par l'invention permet, par irradiation à travers un masque, de fabriquer un film guide d'onde en matériau non magnétique, comprenant un réseau régulier de motifs magnétiques (cristal photonique) d'indice optique à la fois légèrement différent de celui du matériau hôte, et commandable par effet magnétique.

De façon générale, le procédé proposé par l'invention peut s'appliquer à chaque fois qu'il est intéressant de définir avec précision un élément magnétique tout en conservant une très grande planéité du dispositif (par exemple pour favoriser une croissance ultérieure).

Le procédé proposé par l'invention peut aussi être utilisé pour graver magnétiquement une couche déjà enterrée sous d'autres couches non sensibles, en ajustant les conditions d'irradiation. Par exemple, et à titre non limitatif, on peut réaliser des circuits électriques gravés dans un même matériau magnétique en film mince, et dont seule la partie importante sera gardée magnétique, les pistes de contact ayant été rendues inactives par irradiation ; on peut affaiblir de manière contrôlée le champ coercitif d'une zone donnée d'un échantillon, de façon à garantir que le retournement de l'aimantation se produira toujours dans les mêmes conditions, à partir du même site.

Le procédé proposé par l'invention peut à priori s'adapter à tout matériau pour lequel une variation minime de l'arrangement atomique local peut conduire à une modification importante des propriétés magnétiques, c'est à dire aux alliages de métaux de transition (ex : CoPt, NiFe, ...), aux alliages terres rares/métaux de transition (ex : TbFeCo, etc...) et aux multicouches magnétiques (ex : Co/Pt, Fe/Tb, ...), sans que cette liste soit limitative.

Les multicouches Co/Pt sont des matériaux potentiellement intéressants pour l'enregistrement magnéto-optique à courte longueur d'onde en lumière bleue.

## DESCRIPTION D'UN OU PLUSIEURS EXEMPLES DE MISE EN OEUVRE

Le procédé de gravure magnétique par irradiation est décrit ci-dessous dans le cas de multicouches magnétiques irradiées par un faisceau d'ions et met en oeuvre plusieurs étapes selon lesquelles :

- (i) on contrôle avec précision la composition et la rugosité interfaciale et en surface des couches avant irradiation ;
- (ii) on irradie la structure multicouches par un faisceau ionique en contrôlant la modification structurale induite par le faisceau ; en particulier, on contrôle la densité d'énergie déposée par le faisceau, par l'intermédiaire du choix de la masse et de l'énergie des ions incidents ;
- (iii) éventuellement, on complète l'irradiation par un recuit thermique approprié pour relaxer des contraintes et/ou induire une mise en ordre locale.

Dans le cas des matériaux magnétiques, les effets du procédé sont importants sur des alliages (alliages de métaux de transition, alliages de terres rares et terres rares-métaux de transition), et sur les empilements multicouches de tous types.

Le procédé est avantageusement mis en oeuvre avec des multicouches Co/Pt. On notera que ces matériaux ont déjà été très étudiés pour leurs propriétés d'une part d'anisotropie magnétique perpendiculaire et d'autre part de fort effet Kerr magnéto-optique; ils constituent donc des candidats intéressants pour l'enregistrement magnéto-optique.

Dans les matériaux à base de couches ultraminces, les propriétés sont dominées par la compétition entre les effets d'interfaces et les propriétés de volume. La direction de facile aimantation par exemple est donnée par le signe d'un coefficient d'anisotropie effectif $K_{eff}$, qui au premier ordre s'écrit :

$$K_{eff} = -K_d + K_v + \left(K_{s1} + K_{s2}\right)\Big/t_{Co}$$

Le premier terme représente l'anisotropie dipolaire de forme ($K_d > 0$), le deuxième l'anisotropie de volume ($K_v > 0$ pour le Co), et le dernier est dû aux interfaces ($K_s > 0$ dans le cas de l'interface Co/Pt), dont l'influence varie comme l'inverse de l'épaisseur $t_{Co}$ de Co ($K_{s1}$ et $K_{s2}$ désignant les coefficients d'anisotropie magnétique des deux interfaces du film de Co. Selon le signe de $K_{eff}$, l'axe de facile aimantation est soit l'axe perpendiculaire au plan des couches ($K_{eff} > 0$), soit le plan du film. La configuration perpendiculaire s'impose pour l'enregistrement magnéto-optique, et deviendra probablement la norme pour l'enregistrement magnétique ultra-haute densité, toutes techniques confondues.

On se limite préférentiellement à des irradiations conduisant à des dépôts d'énergie faibles (faible nombre de déplacements atomiques aux interfaces qui nous intéressent). Ceci peut être réalisé par exemple par des ions légers (ex : He$^+$) à basse énergie (quelques keV à la centaine de keV) ou bien par des ions lourds (ex : masse de l'ordre de 100) à des énergies relativement élevées (typiquement le MeV). L'irradiation modifie d'abord la composition de l'interface, et donc en particulier l'anisotropie. Pour les films les plus minces (1 ou 2 plans atomiques), ou pour des doses plus élevées, on modifie aussi (par transfert d'atomes d'une couche à l'autre) la composition du film, donc son magnétisme de volume ; dans le cas particulier du Co/Pt, la température de Curie de l'alliage CoPt diminue avec la concentration en Pt, pour devenir inférieure à la température ambiante vers 75% de Pt.

Les inventeurs ont, par exemple, rendu paramagnétique à température ordinaire, de manière contrôlée, des échantillons avec une épaisseur $t_{Co}$ de 0,5 nm, en irradiant à une dose (très faible) de $10^{16}$ ions/cm$^2$ avec des ions He+ accélérés à 30 KeV. .

Les effets de l'irradiation ont d'abord été caractérisés sur des sandwichs simples Pt(3,4nm)/Co($t_{Co}$)/Pt (6,5nm)/substrat amorphe (silice polie Herasil, SiO$_2$/Si, Si$_3$N$_4$/Si), déposés par pulvérisation cathodique.

Avec la technique de dépôt utilisée, on obtient avant irradiation des films magnétiques à axe de facile aimantation perpendiculaire et cycle d'hystérésis polaire parfaitement carré (100% d'aimantation rémanente) dans la gamme d'épaisseur de Co : 0,3-1,2 nm.

L'irradiation de ces échantillons à des fluences d'ions He$^+$ jusque vers 2 10$^{15}$ atomes/cm$^2$, accélérés à des énergies comprises entre 5 et 100 keV permet effectivement d'ajuster les propriétés magnétiques d'une couche ultramince de Co :

1. sur des couches d'épaisseur 0,5 nm (environ 2,25 plans atomiques), l'effet principal est une baisse de la température de Curie, qui peut descendre en dessous de la température ambiante pour une dose de l'ordre de 2 10$^{16}$ ions par cm$^2$. Jusque-là, le film garde un axe de facile aimantation perpendiculaire et un cycle carré, mais dont le champ coercitif diminue régulièrement quand on augmente la dose d'irradiation. Des cycles d'aimantation carrés avec des coercivités de quelques Oe ont été obtenus. Des applications intéressantes pour la réalisation de capteurs en champ faible peuvent être envisagées.

2. sur des échantillons d'épaisseur 1 nm (environ 5 plans atomiques), l'effet principal de l'irradiation est un basculement de l'axe de facile aimantation dans le plan du film, lié à un affaiblissement du terme d'anisotropie d'interface $K_S$. L'effet est obtenu pour des doses faibles, parce que l'épaisseur initiale est proche de celle (1,2 nm) où l'effet de basculement se produit dans les échantillons d'origine.

3. sur des échantillons d'épaisseur intermédiaire (0,8 nm, soit 4 plans atomiques), les mêmes doses ne donnent aucun effet visible sur le cycle d'hystérésis : à ces épaisseurs, la température de Curie est déjà très élevée (proche de celle du Co massif), donc peu sensible à des modifications faibles de l'interface, et on est aussi très éloigné de l'épaisseur naturelle de basculement de l'axe de facile aimantation. Ceci constitue une caractéristique intéressante du procédé, puisqu'elle permet d'une part d'irradier une bicouche en ne modifiant qu'une seule des couches et d'autre part de travailler à des doses plus fortes et plus favorables à l'homogénéité.

Il convient de noter que l'énergie d'accélération des ions a une influence moindre sur la modification des propriétés magnétiques que sur la répartition en profondeur du taux de déplacements dans le matériau. Ceci peut permettre la mise en oeuvre du procédé dans des couches minces enterrées à des profondeurs nettement plus grandes que celles utilisées dans l'exemple de démonstration.

Une caractéristique essentielle du procédé proposé est que, si l'effet de l'irradiation sur le magnétisme est important, son effet sur la réflectivité optique de l'échantillon reste faible.

Le contraste est invisible à l'oeil nu, et à peine visible dans un bon microscope (contraste comparable à celui d'une paroi de domaine dans un échantillon Pt/Co/Pt). La faiblesse de l'effet optique est liée à la faiblesse des modifications structurales induites.

Des essais sur des empilements multicouches (Pt/Co)$_6$/Pt ont également été mis en oeuvre. Les structures de ces multicouches (épaisseurs, nombre de périodes Co/Pt) ont été choisies autour des valeurs habituellement utilisées pour les supports d'enregistrement magnéto-optique. Par rapport à l'image simple de la variation d'anisotropie avec l'épaisseur de Co, exposée ci dessus pour les films simples, les effets de l'irradiation sur les propriétés magnétiques sont rendus plus complexes dans les multicouches par l'interaction magnétique entre les couches, qui peut être soit d'origine dipolaire, soit une interaction d'échange portée par les électrons de conduction du platine. Cette dernière interaction, qui se traduit même par un ferromagnétisme du Pt pour les couches d'interface, contribue à renforcer la température de Curie des multicouches, surtout quand l'épaisseur de Co est très faible. La présence de ces deux interactions conduit aussi à l'existence d'un domaine d'épaisseur de Co assez étendu où le système se décompose en domaines magnétiques réguliers au sein desquels l'aimantation est perpendiculaire (configuration de domaines "en rubans"), même pour des valeurs de $K_{eff}$ faiblement négatives où l'on attendrait un plan de facile aimantation.

Les essais ont été effectués sur deux séries d'échantillons, de même épaisseur de Co (donc même anisotropie de couche unique) et nombre de périodes, et différents par l'épaisseur de la couche de séparation en Pt.

série A : Pt(2nm)/[Pt(1.4nm)/Co(0.3nm)]$_6$/Pt (6.5nm)

série B : Pt(2nm)/[Pt(0.6nm)/Co(0.3nm)]$_6$/Pt (6.5nm)

Dans le cas de la série B, la concentration en Pt de l'alliage après une interdiffusion totale serait de l'ordre de 66% (alliage ferromagnétique), alors qu'elle serait de 82% pour la série A, (alliage non magnétique). En contrepartie, dans la série B, où l'intercalaire de Pt est plus mince, les couches de Co sont plus fortement en interaction, ce qui rend a priori plus facile à obtenir la configuration en domaines "en rubans", puis le plan facile d'aimantation, par une diminution de l'anisotropie.

Dans la plage des doses testées (jusqu'à 10$^{16}$ pour la série A, et 2.6 10$^{16}$ pour la série B), les résultats d'irradiation montrent qualitativement les mêmes effets pour les deux séries : passage progressif (et facilement contrôlable) d'un axe de facile aimantation perpendiculaire (avec un cycle d'hystérésis parfaitement carré dont le champ coercitif diminue avec la dose d'irradiation), à une configuration de domaines "en rubans", puis à un plan de facile aimantation. Comme justifié ci-dessus, ce basculement se fait à dose plus faible pour la série B (3 10$^{15}$ contre 6 10$^{15}$ ions/cm$^2$). Aux doses utilisées tous les échantillons sont restés ferromagnétiques à température ambiante.

Dans tous les cas décrits ci-dessus, aucune variation de la rugosité de surface de l'échantillon n'a pu être détectée par AFM sous air, pour des rugosités de départ pourtant extrêmement faibles, de l'ordre de 0,2 nm rms.

Des essais avec irradiation à travers un masque de résine ont également été mis en oeuvre.

Sur des échantillons sandwiches simples Pt (3,4nm)/Co(0,5nm)/Pt(6,5nm) /Herasil, deux types de résine ont été testées :

1. Une résine négative Shipley, adaptée à la lithographie submicronique par lithographie par rayons X. La résine avait été déposée en couche épaisse (0.8 μm) sur la moitié seulement d'un échantillon, et recuite ensuite dans les conditions habituelles. L'ensemble de l'échantillon a alors été irradié, et la résine enlevée, toujours dans les conditions habituelles (bain de trichloroéthylène chaud).

La partie non protégée par la résine reproduit les effets de l'irradiation décrits plus haut, tandis que la partie protégée ne montre aucune évolution de ses propriétés. En principe, suivant des processus déjà mis au point par ailleurs, l'utilisation de la même résine, mais avec une étape de lithographie X en plus pour y définir un réseau de trous, doit permettre d'obtenir au minimum des réseaux de bits magnétiquement gravés de dimensions 0,2 μm espacés de 0,2 μm, soit une densité d'enregistrement de 25 bits par μm$^2$, près de 20 fois supérieure aux densités actuelles.

2. une résine positive PMMA, adaptée à la lithographie électronique. La résine a été déposée en couche de l'ordre de 0,85 μm d'épaisseur, et non recuite dans ce cas, ce qui peut avoir une influence sur la qualité des bords de motifs. Aux conditions de recuit standard de cette résine (160°C, 30 mn), des effets commencent à apparaître sur les échantillons, mais des recuits d'aussi bonne qualité sont possibles à des températures plus basses (<120°C), auxquelles les échantillons sont insensibles). Les échantillons ont ensuite subi une étape de lithographie électronique, pour définir en creux dans la résine un réseau de lignes de 1 μm de large, séparées de 1μm, sur une surface de 800x800 μm$^2$. La totalité de l'échantillon est alors irradiée, et la résine enlevée dans les conditions standard. L'observation en microscopie magnéto-optique montre que, à la dose d'irradiation choisie (10$^{16}$ atomes/cm$^2$), la partie irradiée devient paramagnétique à température ambiante (cet état présente l'avantage de supprimer le couplage entre zones magnétiques). La partie protégée par la résine reste aimantée perpendiculairement, avec un cycle carré similaire à celui de l'échantillon d'origine.

Sur une multicouche Pt(2nm)/[Pt(0.6nm)/Co (0.3nm)]$_6$/Pt(6.5nm) de la série B, le même processus de lithographie électronique que ci-dessus a été appliqué pour créer le même réseau de lignes, suivi par une irradiation à la dose de 2 10$^{15}$ atomes/cm$^2$. Mais, contrairement au cas de la couche simple de 0,5 nm de Co, les deux parties (partie protégée et partie irradiée) gardent une aimantation perpendiculaire et un cycle carré, avec toutefois un champ coercitif plus faible pour la partie irradiée. Effectivement, l'observation en microscopie magnéto-optique montre bien un retournement de l'aimantation en champ appliqué inverse après saturation, qui se fait d'abord dans les lignes irradiées, puis se propage dans les parties non irradiées (lignes et film à l'extérieur du réseau). Dans la zone intermédiaire, on obtient donc des domaines magnétiques artificiellement crées par lithographie. Des essais ont ensuite été faits en microscopie magnéto-optique en champ proche, qui ont permis de voir ces domaines artificiels avec une très grande précision. Ceci démontre par conséquent la faisabilité du procédé proposé à l'enregistrement "contact". En contrepartie, sur des échantillons similaires, mais gravés par ablation de matière, la même technique de microscopie en champ proche ne voit que les effets de diffraction.

Il faut noter que, après irradiation, la résine PMMA s'enlève plus difficilement. Il reste des résidus le long des motifs, qui donnent une rugosité et un faible contraste optique d'origine non magnétique, ce qui nécessite une procédure de décapage supplémentaire en "plasma oxygène" (procédure tout à fait connue en micro-technologies).

Enfin, avec la précision de la lithographie électronique en résine PMMA, nous pouvons espérer atteindre des dimensions de bits inférieures à 100nm, soit une densité supérieure à 100 bits/$\mu$m$^2$.

Les techniques du type de celles qui viennent d'être décrites sont avantageusement utilisées pour la fabrication de couches comportant des structures magnétiques enterrées, notamment pour la réalisation de supports d'enregistrement magnétiquement structurés, ou de dispositifs magnéto-électroniques tels que des mémoires M-RAM, logiques, etc.

Elles permettent une gravure magnétique planaire de couches magn,étiques enterrées, qui ne modifie pas la rugosité de surface du matériau, et permet de contrôler les variations de propriétés optiques pour par exemple les rendre négligeables.

Ces techniques sont utilisables pour l'industrialisation de masse.

En utilisant des ions légers, ceux-ci, qui n'ont aucun effet de gravure, vont s'implanter profondément dans le substrat, très au dessous de la couche,

Le paramètre est alors l'énergie déposée par l'ion le long de la trajectoire - et non pas les cascades de défauts engendrés par des ions lourds - ce qui permet un excellent contrôle des modifications électromagnétiques, pour des doses élevées, ce qui donne un effet homogène.

Par ailleurs, avec la technique proposée, on obtient intrinsèquement une zone de facile nucléation, due au retournement de l'aimantation) et liée à des phénomènes se produisant en bordure de zone irradiée. Ceci est un atout important pour contrôler et uniformiser le champ de retournement de l'aimantation dans une assemblée de « particules » magnétiques, soit pour matériau support d'enregistrement, soit pour une puce mémoire ou logique, sans limitation.

## Revendications

1. Procédé d'inscription selon lequel on irradie un matériau au moyen d'un faisceau d'ions légers, tels que des ions He+, d'une énergie de l'ordre de ou inférieure à la centaine de keV, **caractérisé en ce que** ledit matériau est un matériau en couches minces enterrées déposées sur un substrat, **en ce qu'**on irradie une ou plusieurs zones de tailles de l'ordre du micromètre ou inférieure, la dose d'irradiation étant contrôlée pour être de quelques 10$^{16}$ ions/cm2 ou inférieure, l'irradiation modifiant la composition de plans atomiques dans le matériau à une interface entre deux couches de celui-ci.

2. Procédé selon la revendication 1, **caractérisé en ce qu'**on irradie à travers un masque.

3. Procédé d'enregistrement magnétique ou magné-to-optique d'informations binaires, notamment d'élaboration de matériaux magnétiques discrets, de circuits de mémoires magnétiques, ou de circuits logiques à commande magnétique, **caractérisé en ce qu'**il met en oeuvre un procédé d'inscription selon l'une des revendications précédentes.

4. Procédé d'enregistrement optique de type à mémoire morte, **caractérisé en ce qu'**il met en oeuvre un procédé d'inscription selon l'une des revendications 1 ou 2

5. Procédé selon l'une des revendications 5 ou 6, **caractérisé en ce que** le matériau d'enregistrement est un matériau multicouche magnétique, dont les couches individuelles sont des métaux purs ou des alliages de métaux de transition ou de terres rares.

6. Procédé de réalisation de circuits optiques à commande magnétique utilisant une variation contrôlée de la composante d'indice optique liée au magnétisme, **caractérisé en ce qu'**il met en oeuvre un procédé d'inscription selon l'une des revendications 1 ou 2.

## Patentansprüche

1. Einbringungsverfahren, bei dem ein Material mittels eines Strahles leichter Ionen, wie He$^+$-Ionen, mit einer Energie in der Größenordnung von etwa hundert keV oder kleiner bestrahlt wird, **dadurch gekennzeichnet, daß** das Material ein Material aus auf einem Substrat aufgetragenen, vergrabenen dünnen Schichten ist, daß ein oder mehrere Felder von einer Größe im Mikrometerbereich oder kleiner bestrahlt werden, wobei die Bestrahlungsdosis gesteuert wird, damit sie einige 10$^{16}$ Ionen/cm$^2$ oder kleiner ist, und die Bestrahlung die Zusammensetzung der atomaren Ebenen im Material an einer Grenzfläche zwischen zwei von dessen Schichten modifiziert.

2. Verfahren nach Anspruch 1, **dadurch gekennzeichnet, daß** durch eine Maske bestrahlt wird.

3. Verfahren zur magnetischen oder magneto-optischen Aufzeichnung von Binärinformation, insbesondere zur Fertigung diskreter magnetischer Materialien, magnetischer Speicherschaltungen oder logischer Schaltungen mit magnetischer Steuerung, **dadurch gekennzeichnet, daß** ein Einbringungsverfahren nach einem der vorhergehenden Ansprüche angewandt wird.

4. Verfahren zur optischen Aufzeichnung nach Art eines Totspeichers, **dadurch gekennzeichnet, daß** ein Einbringungsverfahren nach einem der Ansprüche 1 oder 2 angewandt wird.

**5.** Verfahren nach einem der Ansprüche 5 oder 6, **dadurch gekennzeichnet, daß** das Aufzeichnungsmaterial ein magnetisches Mehrschichtmaterial ist, dessen einzelne Schichten reine Metalle oder Legierungen von Übergangsmetallen oder seltenen Erden sind.

**6.** Verfahren zur Herstellung optischer Schaltungen mit magnetischer Steuerung, die eine gesteuerte Variation der mit dem Magnetismus verbundenen optischen Indexkomponente anwenden, **dadurch gekennzeichnet, daß** ein Einbringungsverfahren nach einem der Ansprüche 1 oder 2 angewandt wird.

**Claims**

**1.** Process for writing, in which a material is irradiated by means of a beam of light ions, such as He$^+$ ions, having an energy of the order of or less than a hundred keV, **characterized in that** the said material is a thin-layer material comprising buried layers deposited on a substrate, and **in that** one or more regions having sizes of the order of 1 micrometre or less are irradiated, the irradiation dose being controlled so as to be a few $10^{16}$ ions/cm$^2$ or less, the irradiation modifying the composition of atomic planes in the material at an interface between two layers of the latter.

**2.** Process according to Claim 1, **characterized in that** the irradiation is carried out through a mask.

**3.** Process for the magnetic or magnetooptic recording of binary information, especially for the production of discrete magnetic materials, of magnetic memory circuits or of magnetically-controllable logic circuits, **characterized in that** it employs a writing process according to one of the preceding claims.

**4.** Optical recording process of the read-only memory type, **characterized in that** it employs a writing process according to either of Claims 1 and 2.

**5.** Process according to either of Claims 5 and 6, **characterized in that** the recording material is a magnetic multilayer material, the individual layers of which are pure metals or transition metal alloys or rare earth alloys.

**6.** Process for producing magnetically-controllable optical circuits using a controlled variation of the optical index component associated with magnetism, **characterized in that** it employs a writing process according to either of Claims 1 and 2.